# EUROPÄISCHE PATENTSCHRIFT

(11) **EP 1 505 503 B1**
(45) Veröffentlichungstag und Bekanntmachung des Hinweises auf die Patenterteilung: **27.10.2010**
(21) Anmeldenummer: 04090220.7
(22) Anmeldetag: 07.06.2004
(51) Int. Cl.: G06F 11/07, G06F 11/16

(54) **Verfahren und Computersystem zum Betreiben einer sicherungstechnischen Anlage**
Method and computer system to operate a safety installation
Procédé et système d'ordinateur pour exploiter une installation de sécurité

(30) Priorität: 11.07.2003 DE 10332557
(43) Veröffentlichungstag der Anmeldung: 09.02.2005
(73) Patentinhaber: SIEMENS AKTIENGESELLSCHAFT, 80333 München (DE)
(72) Erfinder: Braband, Jens, 38106 Braunschweig (DE)

(56) Entgegenhaltungen:
- WO-A-01/88711
- WO-A-99/30235
- DE-A1- 19 543 817
- GB-A- 2 122 393
- GB-A- 2 219 865
- US-A1- 2002 116 662

## Beschreibung

Die Erfindung bezieht sich auf ein Verfahren zum Betreiben einer sicherungstechnischen Anlage gemäß dem Oberbegriff des Patentanspruchs 1 sowie ein Computersystem zum Betreiben einer sicherungstechnischen Anlage gemäß dem Oberbegriff des Patentanspruchs 6.

Bei vielen modernen technischen Prozessen, beispielsweise bei der Steuerung von Kernreaktoren oder bei Eisenbahnsicherungsanlagen, wird seit vielen Jahren nach einem anerkannten sicherungstechnischen Prinzip gearbeitet, wodurch bei etwaigen technischen Fehlern der zu steuernde Prozess in einen für den Menschen und für das Material unbedenklichen Zustand überführt wird.

Aus EP 0 281 890 ist dazu beispielsweise ein zweikanaliges 2V2-Sicherheitsschaltwerk bekannt, welches zwei parallel dieselben Informationen verarbeitende Mikrocomputer verwendet, wobei eine Vergleichseinrichtung nach einer festgestellten Ungleichheit beider Kanäle die Anlage abschaltet.

Die Abschaltung der Sicherungsanlage führt nun allerdings dazu, dass ein Weiterführen des Betriebes nur auf die menschliche Zuverlässigkeit gestützt möglich ist.

Aus der Druckschrift GB 2 122 393 A ist ferner ein Verfahren beziehungsweise ein Computersystem gemäß dem Oberbegriff der Ansprüche 1 bis 6 bekannt. Hierbei wird für den Fall, dass seitens der Vergleichseinrichtung eine Abweichung zwischen zwei Rechnerkanälen festgestellt wird, eine Verarbeitung von Testdaten angestoßen und ein defekter Rechnerkanal anhand des von ihm gelieferten Ergebnisses erkannt.

Es ist daher die Aufgabe der Erfindung, ein Verfahren und ein Computersystem zum Betreiben einer sicherungstechnischen Anlage anzugeben, welche eine besonders umfassende Überprüfung der Funktionalität der Rechnerkanäle erlauben.

Die Aufgabe wird erfindungsgemäß durch ein Verfahren der eingangs genannten Art mit den kennzeichnenden Merkmalen des Patentanspruchs 1 sowie ein Computersystem der eingangs genannten Art mit den kennzeichnenden Merkmalen des Patentanspruchs 6 gelöst.

Dabei wird in dem Fall, dass die Vergleichseinrichtung, die die vom ersten und zweiten Rechnerkanal ausgegebenen Signale miteinander vergleicht, eine Abweichung der Signale voneinander feststellt, eine vordefinierte Abfrage an den ersten und den zweiten Rechnerkanal gegeben. Auf diese vordefinierte Abfrage antworten der erste und zweite Rechnerkanal und die Vergleichseinrichtung wertet die zurückgelieferten Antworten aus. Ergibt diese Auswertung, dass eine der von beiden Rechnerkanälen zurückgelieferten Antworten der erwarteten Antwort entspricht, wird die sicherungstechnische Anlage mit dem Rechnerkanal alleine weiterbetrieben, der die erwartete Antwort zurückgeliefert hat. Dadurch wird eine sicherungstechnische Anlage einkanalig weiterbetrieben. Der fehleranfällige Einfluss des Menschen ist somit ausgeschaltet und stattdessen wird mit dem gegenüber dem Menschen zuverlässigeren einen Rechnerkanal weitergearbeitet. Da in der Regel durch den einkanaligen Betrieb schneller als durch den Menschen alleine gearbeitet werden kann, steigt somit auch die Verfügbarkeit der sicherungstechnischen Anlage.

Als vordefinierte Abfrage wird hierbei eine kryptographische Funktion benutzt, die auf in den beiden Rechnerkanälen vorhandene Anwendersoftware angewendet wird. Die kryptographische Funktion liefert einen Wert zurück, der bei unterschiedlichen Codes der Anwendersoftware ebenfalls unterschiedlich ist. Auf diese Weise lässt sich überprüfen, in welchem der beiden Rechnerkanäle der Code der Anwendersoftware noch mit dem erwarteten Code der Anwendersoftware übereinstimmt.

Alternativ oder zusätzlich zur Verwendung einer kryptographischen Funktion, die auf in den beiden Rechnerkanälen vorhandene Anwendersoftware angewendet wird, wird als vordefinierte Abfrage eine kryptographische Funktion benutzt, die auf in den beiden Rechnerkanälen vorhandene projektierte Daten angewendet wird. Die projektierten Daten sind fest in den beiden Rechnerkanälen abgespeichert und verändern sich während des Betriebs der sicherungstechnischen Anlage nicht. Durch die kryptographische Funktion lässt sich feststellen, in welchen der beiden Rechnerkanäle sich die projektierten Daten gegenüber erwarteten projektierten Daten verändert haben.

Ist in vorteilhafter Weise gemäß Patentanspruch 2 der Vergleichseinrichtung bereits vor dem Ausführen der Abfrage bekannt, was als Ergebnis der vordefinierten Abfrage erhalten werden soll, so ist dafür in der Vergleichseinrichtung weniger Rechenkapazität erforderlich.

Liefern gemäß Anspruch 3 beide Rechnerkanäle das erwartete Ergebnis zurück, so ist wohl von einem temporären Fehler auszugehen, so dass ein Wiederanlauf beider Rechnerkanäle gestartet wird, wonach die Anlage wieder zweikanalig betrieben wird.

Liefern hingegen beide Rechnerkanäle gemäß Anspruch 4 ein nicht erwartetes Ergebnis zurück, so ist davon auszugehen, dass beide Rechnerkanäle fehlerhaft sind und die Anlage wird abgeschaltet.

Besonders vorteilhaft lässt sich das Verfahren gemäß Anspruch 5 für Eisenbahn-Signal-Sicherungsanlagen verwenden.

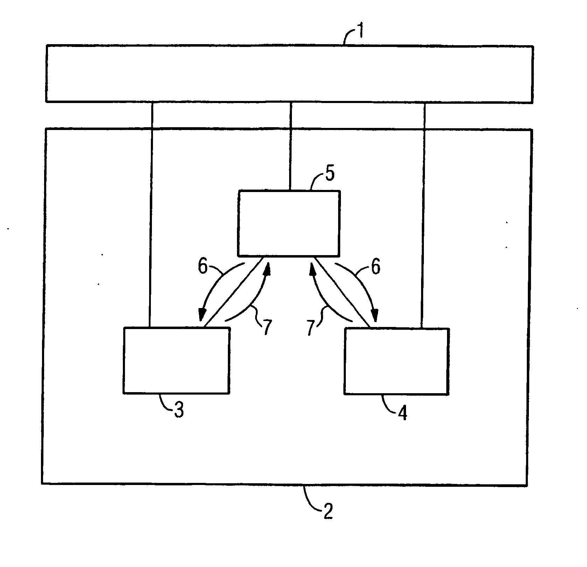

Anhand der einzigen Figur der Zeichnung wird die Erfindung mit Hilfe eines Ausführungsbeispiels näher erläutert. Dabei zeigt die Figur eine schematische Schaltanordnung eines erfindungsgemäßen Computersystems zum Steuern einer sicherungstechnischen Anlage.

In der Figur ist dargestellt wie eine sicherungstechnische Anlage, beispielsweise eine Signal-Sicherungsanlage einer Eisenbahn, von einem Computersystem 2 betrieben wird. Dabei sind im Computersystem 2 ein erster Rechnerkanal 3 und ein zweiter Rechnerkanal 4 vorgesehen, die Ablaufdaten von der sicherungstechnischen Anlage 1 erhalten. Ablaufdaten einer bahntechnischen Sicherungsanlage können beispielsweise Informationen über Signalstellungen, Weichenstellungen und Netzabschnittsbelegungen sein. Die Ablaufdaten werden vom ersten Rechnerkanal 3 und vom zweiten Rechnerkanal 4 verarbeitet und es werden entsprechende Signale erzeugt, die sowohl vom ersten Rechnerkanal 3 als auch vom zweiten Rechnerkanal 4 an eine Vergleichseinrichtung 5 (Watchdog) weitergegeben werden. Alle Rechnerkanäle verfügen über die Möglichkeit, sich eindeutig beispielsweise über eine Kanal-ID zu identifizieren. Die Vergleichseinrichtung 5 überprüft nun, ob die Signale des ersten Rechnerkanals 3 und des zweiten Rechnerkanals 4 übereinstimmen und benutzt die Signale im Falle der Übereinstimmung dazu, die sicherungstechnische Anlage 1 zu betreiben, d. h. beispielsweise Signale oder Weichen umzustellen. Da von zwei Rechnerkanälen (3,4) zwei gleiche Signale erhalten werden müssen, wird dieses Verfahren als 2V2(2von2)-Sicherungsverfahren bezeichnet.

Stellt die Vergleichseinrichtung 5 nun während des Betriebs der sicherungstechnischen Anlage 1 fest, dass sich die Signale des ersten Rechnerkanals 3 von denen des zweiten Rechnerkanals 4 unterscheiden, so werden die daraus resultierenden Signale nicht an die sicherungstechnische Anlage 1 weitergegeben, sondern es wird zunächst eine vordefinierte Abfrage 6 (Challenge) an den ersten Rechnerkanal 3 und den zweiten Rechnerkanal 4 gegeben. Die vordefinierte Abfrage 6 ist dabei so zu wählen, dass möglichst viel der Funktionalität der Rechnerkanäle 3,4 bei der Beantwortung einbezogen wird. Als vordefinierte Abfrage 6 eignen sich dabei besonders kryptographische Funktionen, beispielsweise sogenannte Hash-Funktionen, die auf die Anwendersoftware bzw. die projektierten Daten im ersten Rechnerkanal 3 und im zweiten Rechnerkanal 4 angewendet werden. Die Anwendersoftware und die projektierten Daten im ersten Rechnerkanal 3 und im zweiten Rechnerkanal 4 sollten sich nicht unterscheiden, d. h., dass die Hash-Funktion im ungestörten Fall für den ersten Rechnerkanal 3 und den zweiten Rechnerkanal 4 das gleiche Ergebnis liefern sollte.

Kryptographische Funktionen sind dabei stark nichtlineare Funktionen, so dass auch kleine Änderungen in der Anwendersoftware bzw. den projektierten Daten sich in einem stark veränderten Funktionsergebnis niederschlagen. Bekannte Hash-Funktionen sind beispielsweise MD4 und MD5 (MD: Message Digest). Das Funktionsergebnis wird als Antwort (Response) vom ersten Rechnerkanal 3 und vom zweiten Rechnerkanal 4 an die Vergleichseinrichtung 5 zurückgeliefert. Die Vergleichseinrichtung 5 untersucht nun, welche der beiden zurückgelieferten Antworten 7 mit einer vorher ermittelten erwarteten Antwort übereinstimmen. In vorteilhafter Weise ist dabei die erwartete Antwort bereits vor Durchführung der Abfrage 6 in der Vergleichseinrichtung 5 bekannt, damit diese ohne aufwendige Rechenschritte das erwartete Ergebnis bereits zur Verfügung hat. Die Vergleichseinrichtung 5 identifiziert auf diese Weise den Rechnerkanal, der das erwartete Ergebnis 7 zurückliefert, schaltet den anderen, gestörten Rechnerkanal ab und betreibt die sicherungstechnische Anlage 1 alleine mit dem ungestörten Rechnerkanal weiter. Der gestörte Rechnerkanal kann dann beispielsweise heruntergefahren und untersucht werden, und nach Behebung des Fehlers wieder auf das Computersystem 2 aufgeschaltet werden. Durch den einkanaligen Betrieb wird die Sicherheit der sicherungstechnischen Anlage gegenüber einem Betrieb der sicherungstechnischen Anlage 1 alleine durch den Menschen signifikant erhöht.

Stellt die Vergleichseinrichtung 5 fest, dass beide Rechnerkanäle 3, 4 das erwartete Ergebnis 7 zurückliefern, so wird zunächst ein Wiederanlauf des Betriebs der sicherungstechnischen Anlage 1 mit beiden Rechnerkanälen 3 und 4 versucht. Erst bei einer wiederholten Abweichung der Signale vom ersten Rechnerkanal 3 und vom zweiten Rechnerkanal 4 wird die sicherungstechnische Anlage 1 abgeschaltet.

Stellt hingegen die Vergleichseinrichtung 5 fest, dass beide Rechnerkanäle nicht das erwartete Ergebnis 7 zurückliefern, wird die sicherungstechnische Anlage 1 sofort abgeschaltet, da dann nicht davon auszugehen ist, dass keiner der beiden Rechnerkanäle 3, 4 noch ordnungsgemäß arbeitet.

Anstelle von Systemen mit zwei Rechnerkanälen 3, 4 lässt sich das erfindungsgemäße Verfahren natürlich auch bei mehr als zwei Rechnerkanälen entsprechend anwenden.

## Patentansprüche

1. Verfahren zum Betreiben einer sicherungstechnischen Anlage (1) bei dem
- ein erster (3) und ein zweiter (4) Rechnerkanal zur Verfügung gestellt werden, die unabhängig von einander Daten der sicherungstechnischen Anlage (1) auswerten und daraus Signale ermitteln,
- eine Vergleichseinrichtung (5) die Signale des ersten (3) und des zweiten (4) Rechnerkanals miteinander vergleicht und in Abhängigkeit vom Ergebnis des Vergleichs die sicherungstechnische Anlage (1) betreibt, wobei
- in dem Fall, dass die Vergleichseinrichtung (5) eine Abweichung der Signale des ersten (3) und des zweiten (4) Rechnerkanals feststellt, von der Vergleichseinrichtung (5) eine vordefinierte Abfrage (6) an den ersten (3) und den zweiten (4) Rechnerkanal gegeben wird,
- die auf die vordefinierte Abfrage (6) vom ersten (3) und vom zweiten (4) Rechnerkanal zurückgelieferten Antworten (7) von der Vergleichseinrichtung (5) mit einem zu erwartenden Ergebnis verglichen werden und
- die sicherungstechnische Anlage (1) alleine mit dem Rechnerkanal (3,4) weiterbetrieben wird, der das erwartete Ergebnis zurückgeliefert hat,
**dadurch gekennzeichnet,**
**dass** als vordefinierte Abfrage (6) eine kryptographische Funktion benutzt wird, die auf in den beiden Rechnerkanälen (3,4) vorhandene Anwendersoftware und/oder auf in den beiden Rechnerkanälen (3,4) vorhandene projektierte Daten angewendet wird, wobei die kryptographische Funktion einen Wert zurück liefert, der bei unterschiedlichen Codes der Anwendersoftware beziehungsweise bei unterschiedlichen projektierten Daten ebenfalls unterschiedlich ist.

2. Verfahren zum Betreiben einer sicherungstechnischen Anlage (1) nach Anspruch 1,
**dadurch gekennzeichnet,**
**dass** die vordefinierte Abfrage (6) so gestaltet wird, dass deren Antwort der Vergleichseinrichtung (5) vor dem Ausführen der Abfrage (6) bereits bekannt ist.

3. Verfahren zum Betreiben einer sicherungstechnischen Anlage (1) nach einem der Ansprüche 1 bis 2,
**dadurch gekennzeichnet,**
**dass** im Falle, dass beide Rechnerkanäle (3,4) das erwartete Ergebnis (7) zurückliefern, ein Wiederanlauf beider Rechnerkanäle (3,4) gestartet wird.

4. Verfahren zum Betreiben einer sicherungstechnischen Anlage (1) nach einem der Ansprüche 1 bis 3,
**dadurch gekennzeichnet,**
**dass** im Falle, dass beide Rechnerkanäle (3,4) ein nicht erwartete Ergebnis zurückliefern, die Anlage (1) abgeschaltet wird.

5. Verfahren zum Betreiben einer sicherungstechnischen Anlage (1) nach einem der Ansprüche 1 bis 4,
**dadurch gekennzeichnet,**
**dass** als sicherungstechnische Anlage (1) eine Signalsicherungsanlage einer Eisenbahn verwendet wird.

6. Computersystem (2) zum Betreiben einer sicherungstechnischen Anlage (1) mit
- einem ersten Rechnerkanal (3) und einem zweiten (4) Rechnerkanal, die unabhängig voneinander Daten der sicherungstechnischen Anlage (1) auswerten und daraus Signale ermitteln,
- einer Vergleichseinrichtung (5), die die Signale des ersten (3) und des zweiten (4) Rechnerkanals miteinander vergleicht und in Abhängigkeit vom Ergebnis des Vergleichs die sicherungstechnische Anlage (1) betreibt oder abschaltet, wobei die Vergleichseinrichtung (5) derartig ausgestaltet ist,
- **dass** in dem Fall, dass die Vergleichseinrichtung (5) eine Abweichung der Signale des ersten (3) und des zweiten (4) Rechnerkanals feststellt, von der Vergleichseinrichtung (5) eine vordefinierte Abfrage (6) an den ersten (3) und den zweiten (4) Rechnerkanal gegeben wird,
- **dass** die auf die vordefinierte Abfrage (6) vom ersten (3) und vom zweiten (4) Rechnerkanal zurückgelieferten Antworten (7) von der Vergleichseinrichtung (5) mit einem zu erwartenden Ergebnis verglichen werden und
- **dass** die sicherungstechnische Anlage (1) alleine mit dem Rechnerkanal (3,4) weiterbetrieben wird, der das erwartete Ergebnis zurückgeliefert hat,
**dadurch gekennzeichnet,**
**dass** die Vergleichseinrichtung (5) derartig ausgestaltet ist, dass als vordefinierte Abfrage (6) eine kryptographische Funktion benutzt wird, die auf in den beiden Rechnerkanälen (3,4) vorhandene Anwendersoftware und/oder auf in den beiden Rechnerkanälen (3,4) vorhandene projektierte Daten angewendet wird, wobei die kryptographische Funktion einen Wert zurück liefert, der bei unterschiedlichen Codes der Anwendersoftware beziehungsweise bei unterschiedlichen projektierten Daten ebenfalls unterschiedlich ist.

## Claims

1. Method for operating a safety installation (1), in which
- a first computer channel (3) and a second computer channel (4) are provided, which channels independently evaluate data from the safety installation (1) and determine signals therefrom,
- a comparison device (5) compares the signals from the first computer channel (3) and from the second computer channel (4) and operates the safety installation (1) on the basis of the result of the comparison, wherein
- if the comparison device (5) determines a difference between the signals from the first computer channel (3) and from the second computer channel (4), the comparison device (5) passes a predefined query (6) to the first computer channel (3) and to the second computer channel (4),
- the comparison device (5) compares the responses (7) returned by the first computer channel (3) and by the second computer channel (4) in response to the predefined query (6) with an expected result, and
- the safety installation (1) continues to be operated solely with that computer channel (3, 4) which returned the expected result,
**characterized in that**
the predefined query (6) used is a cryptographic function which is applied to user software present in the two computer channels (3, 4) and/or to projected data present in the two computer channels (3, 4), the cryptographic function returning a value which is likewise different in the case of different codes of the user software and/or in the case of different projected data.

2. Method for operating a safety installation (1) according to Claim 1,
**characterized in that**
the predefined query (6) is configured such that its response is already known to the comparison device (5) before the query (6) is executed.

3. Method for operating a safety installation (1) according to either of Claims 1 and 2,
**characterized in that**,
if the two computer channels (3, 4) return the expected result (7), the two computer channels (3, 4) are restarted.

4. Method for operating a safety installation (1) according to one of Claims 1 to 3,
**characterized in that**,
if the two computer channels (3, 4) return an unexpected result, the installation (1) is switched off.

5. Method for operating a safety installation (1) according to one of Claims 1 to 4,
**characterized in that**
a signal safety installation of a railway is used as the safety installation (1).

6. Computer system (2) for operating a safety installation (1), having
- a first computer channel (3) and a second computer channel (4) which independently evaluate data from the safety installation (1) and determine signals therefrom,
- a comparison device (5) which compares the signals from the first computer channel (3) and from the second computer channel (4) and operates or switches off the safety installation (1) on the basis of the result of the comparison, wherein the comparison device (5) is configured in such a manner that
- if the comparison device (5) determines a difference between the signals from the first computer channel (3) and from the second computer channel (4), the comparison device (5) passes a predefined query (6) to the first computer channel (3) and to the second computer channel (4),
- the comparison device (5) compares the responses (7) returned by the first computer channel (3) and by the second computer channel (4) in response to the predefined query (6) with an expected result, and
- the safety installation (1) continues to be operated solely with that computer channel (3, 4) which returned the expected result,
**characterized in that**
the comparison device (5) is configured in such a manner that the predefined query (6) used is a cryptographic function which is applied to user software present in the two computer channels (3, 4) and/or to projected data present in the two computer channels (3, 4), the cryptographic function returning a value which is likewise different in the case of different codes of the user software and/or in the case of different projected data.

## Revendications

1. Procédé pour faire fonctionner une installation ( 1 ) de sécurité, dans lequel
- on met à disposition un premier ( 3 ) et un deuxième
( 4 ) canal d'ordinateur qui exploitent indépendamment l'un de l'autre des données de l'installation ( 1 ) de sécurité et en détermine des signaux,
- un dispositif ( 5 ) de comparaison compare entre eux les signaux du premier ( 3 ) et du deuxième ( 4 ) canal d'ordinateur et, en fonction du résultat de la comparaison, fait fonctionner l'installation ( 1 ) de sécurité, dans lequel
- dans le cas où le dispositif ( 5 ) de comparaison constate un écart entre les signaux du premier ( 3 ) et du deuxième ( 4 ) canal d'ordinateur, une interrogation ( 6 ) définie à l'avance est envoyée par le dispositif ( 6 ) de comparaison au premier ( 3 ) et au deuxième canal ( 4 ) d'ordinateur,
- les réponses ( 7 ) fournies en retour par le premier
( 3 ) et par le deuxième ( 4 ) canal d'ordinateur à l'interrogation ( 6 ) définie à l'avance sont comparées par le dispositif ( 5 ) de comparaison à un résultat auquel on peut s'attendre et
- on continue à faire fonctionner l'installation ( 1 ) de sécurité seulement avec le canal ( 3 ) d'ordinateur qui fournit en retour le résultat auquel on s'attend, **caractérisé**
**en ce que** l'on utilise comme interrogation ( 6 ) définie à l'avance une fonction cryptographique qui est appliquée à des logiciels d'utilisateur présents dans les deux canaux ( 3, 4 ) d'ordinateur et/ou à des données projetées présentes dans les deux canaux ( 3, 4 ) d'ordinateur, la fonction cryptographique fournissant en retour une valeur qui, si les codes des logiciels utilisateurs sont différents ou si les données projetées sont différentes, est également différente.

2. Procédé pour faire fonctionner une installation ( 1 ) de sécurité suivant la revendication 1,
**caractérisé**
**en ce que**, l'interrogation ( 6 ) définie à l'avance est conformée de manière à ce que sa réponse soit déjà connue du dispositif ( 5 ) de comparaison avant la réalisation de l'interrogation.

3. Procédé pour faire fonctionner une installation ( 1 ) de sécurité suivant l'une des revendications 1 à 2,
**caractérisé**
**en ce que** dans le cas où les deux canaux d'ordinateur fournissent en retour le résultat ( 7 ) attendu, on fait commencer une relance des deux canaux ( 3, 4 ) d'ordinateur.

4. Procédé pour faire fonctionner une installation ( 1 ) de sécurité suivant l'une des revendications 1 à 3,
**caractérisé**
**en ce que**, dans le cas ou les deux canaux ( 3, 4 ) d'ordinateur fournissent en retour un résultat inattendu, on arrête l'installation ( 1 ).

5. Procédé pour faire fonctionner une installation ( 1 ) de sécurité suivant l'une des revendications 1 à 4,
**caractérisé**
**en ce qu'**on utilise comme installation ( 1 ) de sécurité une installation de sécurité par signalisation d'une voie de chemin de fer.

6. Système ( 2 ) informatique pour faire fonctionner une installation ( 1 ) de sécurité, comprenant
- un premier ( 3 ) et un deuxième ( 4 ) canal d'ordinateur qui exploitent indépendamment l'un de l'autre des données de l'installation ( 1 ) de sécurité et en détermine des signaux,
- un dispositif ( 5 ) de comparaison, qui compare les signaux entre eux les signaux du premier ( 3 ) et du deuxième ( 4 ) canal d'ordinateur et qui, en fonction des résultats de la comparaison, fait fonctionner ou arrêter l'installation ( 1 ) de sécurité, le dispositif ( 5 ) de comparaison étant conformé de manière, à ce que
- dans le cas où le dispositif ( 5 ) de comparaison constate un écart entre les signaux du premier ( 3 ) et du deuxième ( 4 ) canal d'ordinateur, une interrogation ( 6 ) définie à l'avance est envoyée par le dispositif ( 6 ) de comparaison au premier ( 3 ) et au deuxième canal ( 4 ) d'ordinateur,
- les réponses ( 7 ) fournies en retour par le premier
( 3 ) et le deuxième ( 4 ) canal d'ordinateur à l'interrogation ( 6 ) définie à l'avance sont comparées par le dispositif ( 5 ) de comparaison à un résultat auquel on peut s'attendre et
- on continue à faire fonctionner l'installation ( 1 ) de sécurité seulement avec le canal ( 3 ) d'ordinateur qui fournit en retour le résultat auquel on s'attend, **caractérisé**
**en ce que** le dispositif ( 5 ) de comparaison est conformé de manière à utiliser, comme interrogation ( 6 ) définie à l'avance, une fonction cryptographique fournissant en retour une valeur qui, si les codes des logiciels utilisateurs sont différents ou si les données projetées sont différentes, est également différente.
